# EUROPEAN PATENT APPLICATION

(11) **EP 1 610 221 A1**
(43) Date of publication of application: **28.12.2005**
(21) Application number: 04724203.7
(22) Date of filing: 29.03.2004
(51) Int. Cl.: G06F 9/445

(54) **INFORMATION PROVIDING DEVICE, METHOD, AND INFORMATION PROVIDING SYSTEM**

(30) Priority: 28.03.2003 JP 2003092166
(71) Applicant: SONY CORPORATION, Tokyo 141-0001 (JP)
(72) Inventor: FUJITA, Masahiro, Shinagawa-ku, Tokyo 1410001 (JP); OMOTE, Masanori, Shinagawa-ku, Tokyo 1410001 (JP)
(74) Representative: Pilch, Adam John Michael
(86) International application number: PCT/JP2004/004433
(87) International publication number: WO 2004/088514

(57) **Abstract**

A robot apparatus and a server communicate with each other in accordance with a SOAP protocol. The information pertinent to a service request, stated in an inquiry from the robot apparatus, the information pertinent to the robot apparatus and the supplementary information of the data or programs are matched to one another in such a manner that data or programs suited to the individual robot apparatus may be provided under a multi-platform environment where there reside plural robot apparatus different in hardware architecture or platforms.

## Description

### Technical Field

This invention relates to an apparatus, a method, and a system for providing data or a program over a network. More particularly, it relates to an apparatus, a method, and a system for providing data or a program to a robot apparatus over a network.

More particularly, this invention relates to a method, an apparatus and a system for providing the information in which there are provided data or programs to plural robot apparatus different in hardware architecture and in platforms and, more specifically, to a method, an apparatus and a system in which there are provided data or programs complying with the difference in hardware architecture and in platforms (a multi-robot platform).

This application claims priority of Japanese Patent Application No.2003-092166, filed in Japan on March 28, 2003, the entirety of which is incorporated by reference herein.

### Background Art

A mechanical apparatus for performing movements simulating the movement of the human being, using an electrical or magnetic operation, is termed a "robot". The etymology of the term "robot" is said to be "ROBOTA" (slave machine) of the Slavonic language. The robots started to be used extensively towards the end of the sixties. Most of the robots used were industrial robots, such as manipulators or transporting robots, aimed at automating the plant operations or realizing unmanned plant operations.

Among the uses of the robot apparatus is procuration of various operations difficult to perform in industrial and productive activities, for example, the procuration of maintenance operations in nuclear power plants or fossil power plants, and in petrochemical plants, transport and assembly operations for component parts in manufacturing plants, cleaning in high-rise buildings or rescue operations on the site of conflagration.

Among other uses of the robot apparatus, there is the livelihood-related use, that is, 'co-living' or 'entertainment' type use, rather than the work support type use of the robot apparatus. This sort of the robot apparatus faithfully reproduces movement mechanisms or rich feeling expressions with four limbs of animals of relatively high intellect, walking on feet, such as humans, dogs (pets) or bears. On the other hand, the robot apparatus of this sort are requested not only to reproduce pre-input movement patterns simply faithfully, but also to perform vivid dynamic response expressions to words or demeanor from a user or other robot apparatus, such as 'praising', 'scolding' or 'patting'.

Recently, various types of the mobile robots, such as robots walking on two legs or four legs, or tired robots, are being put to sale by robot makers.

Meanwhile, for driving the robot apparatus, a variety of software items, such as motion data stating the movements of a body unit or applications performing action control in keeping with external stimuli or with inner states, are required. However, if the totality of the software items, felt to be necessary, are installed from the outset in the robot apparatus, the design memory capacity tends to be surpassed. On the other hand, it may become necessary to install new software items, at an optional timing following the shipment, as a result of version changes or debut of new type of products.

Hence, such a scheme in which a software item is provided to the robot apparatus, as by downloading a new software item from a server on the network to the robot apparatus, is presumed to be necessary.

However, in case services or contents for the robot apparatus are to be supplied from the network, there is presented an inconvenience that respective different services or contents need to be provided to the plural robot apparatus, because the sorts of the robot apparatus differ from maker to maker, and also because the robot apparatus produced by the same maker may differ in hardware architecture or platforms, such as operating systems, middleware items, applications or contents.

### Disclosure of the Invention

It is therefore an object of the present invention to provide a method, an apparatus and a system for providing the information, in which data or programs may optimally be provided to plural robot apparatus different in hardware architecture or in platforms.

It is another object of the present invention to provide a method, an apparatus and a system for providing the information, in which data or programs suited to the individual robot apparatus may optimally be provided under a multi-platform environment different in hardware architecture or in platforms.

In view of the above objects, the present invention provides an information providing apparatus for supplying data or programs over a network to a robot apparatus, comprising content storage means having stored data or programs to be supplied to the robot apparatus, receiving means for receiving an inquiry, pertinent to a service request and the information pertinent to the robot apparatus, from the robot apparatus, analyzing means for analyzing the inquiry, and transmitting means for transmitting data or programs, matched to services requested, to the robot apparatus.

The information providing apparatus includes plural apparatus (or functional modules for implementing specified functions), which apparatus or modules are logically combined together, while it does not matter whether or not the apparatus or functional modules are arranged in the sole casing.

It should be noted that this information providing apparatus may include a logical set of plural apparatus (or plural functional modules for realization of specified functions), it being not crucial whether or not the respective apparatus or functional modules are within a sole casing.

The information providing apparatus may communicate with the robot apparatus in accordance with a SOAP (Simple Object Access Protocol).

The SOAP (Simple Object Access Protocol) is a protocol for invoking data or services on other systems, formed on the basis of the XML (rendered Markup Language) or HTTP (Hyper Text Transfer Protocol). In the communication employing the SOAP, messages composed each of an XML document and the ancillary information appended thereto (envelop) are exchanged in accordance with the protocol exemplified by HTTP. Objects may be invoked between different environment by both the client and the server being provided with engines taking charge of generation and interpretation of SOAP.

The information providing apparatus according to the present invention may further comprise a database for supervising the supplementary information pertinent to data or programs stored in the content storage means, and means for taking the matching between the inquiry and the supplementary information of the database, for preparing a list of data or programs that may be provided, and for returning the list to the robot apparatus.

The information providing apparatus according to the present invention may further comprise means for returning, responsive to results of selection from the robot apparatus for the list of data or programs that can be provided, a method for accessing the selected data or programs. In this case, the transmitting means transmits the data or programs, as requested, responsive to an access request conforming to the accessing method from the robot apparatus.

The supplementary information pertinent to the data or programs includes the information pertinent to services and the information pertinent to the robot apparatus.

With the information providing apparatus, by matching the information pertinent to service requests included in the inquiry from the robot apparatus and the information pertinent to the robot apparatus to the supplementary information of data or programs, data or programs suited to the individual robot apparatus may suitably be provided even under a multi-platform environment where there exist plural robot apparatus different in hardware architecture or platforms.

The information pertinent to the robot apparatus includes at least a part of the following information,
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

When the information pertinent to the robot apparatus includes at least a list of functions of the robot apparatus, the information providing apparatus according to the present invention may further comprise means for specifying the functions needed for the robot apparatus to render services, and means for comparing the needed functions as specified by the function specifying means to the list of functions of the robot apparatus for specifying the functions, among the needed functions, that are in deficit in the robot apparatus. The transmitting means transmits the data or programs for replacing the functions in deficit by functions usable by the robot apparatus.

When the information pertinent to the robot apparatus includes at least a list of functions of the robot apparatus, the information providing apparatus may further comprise object storage means for storage of functional objects utilized by the robot apparatus, means for specifying the functions needed for the robot apparatus to render services, means for comparing the needed functions specified by the function specifying means to the list of functions of the robot apparatus for specifying the functions in deficit in the robot apparatus, among the needed functions, and retrieving means for retrieving an object of the function in deficit, matched to the function in deficit, from the object storage means. The transmitting means transmits the object of the function that are in deficit, along with the data or programs matched to the rendered services, to the robot apparatus.

With this information providing apparatus, data or programs for substituting the functions usable by the robot apparatus for the functions that are in deficit in the robot apparatus, among the functions needed for the robot apparatus to render the services, or objects of the functions in deficit, are transmitted, in consideration of the information pertinent to the functions of the robot apparatus, among the information pertinent to the robot apparatus included in a query from the robot apparatus, whereby services may be rendered for individual robot apparatus even in a multi-platform environment where there reside plural robot apparatus different in the middleware functions.

The information providing system according to the present invention has been fulfilled in consideration of the above objects and includes a robot apparatus and the aforementioned information providing apparatus.

Other objects and specified advantages of the present invention will become more apparent from the following detailed explanation of the preferred embodiments thereof especially when read in conjunction with the accompanying drawings.

### Brief Description of the Drawings

Fig.1 schematically shows an overall structure of an information providing system in a first embodiment of the present invention.
Fig.2 shows an example of a functional configuration of a robot apparatus that may be in operation on the information providing system.
Fig.3 shows a detailed structure of a control unit of the robot apparatus.
Fig.4 schematically shows the functional configuration of a server in the information providing system.
Fig.5 illustrates a scheme for a server to distribute data or a program, consistent with the difference in the hardware structure or in the platform to a robot apparatus as a client.
Fig.6 is a sequential diagram showing the procedure of cooperative operations in which a robot apparatus sends a QA form to make a request for a QA form and the server responds to it.
Fig.7 is a flowchart for illustrating the operational sequence of a contents manager selecting the hardware configuration of a robot apparatus as a client and contentsuited to the platform.
Fig.8 schematically shows an overall structure of an information providing system in a second embodiment of the present invention.
Fig.9 is a sequential diagram showing the procedure of cooperative operations in which a robot apparatus sends out a service request and a functional list to request services and a server responds to it.
Fig.10 shows a software configuration of a robot apparatus.
Fig.11 shows a middleware layer and an application layer of the software of the robot apparatus.
Fig.12 shows an example of a list of functions sent from a robot apparatus 2a to a server.
Fig.13 shows an example of a program for a server to analyze the list of functions sent from the robot apparatus.
Fig.14 shows an example of a tree structure formed by the server to the robot apparatus 2a.
Fig. 15 shows a state machine for implementing an action function of a message behavior module owned by the robot apparatus 2a.
Fig.16 shows an example of a list of functions sent from a robot apparatus 2b to the server.
Fig.17 shows an example of a tree structure formed by data sent by the server to the robot apparatus 2b.
Fig.18 shows a state machine for implementing an action function of a user finding behavior module owned by the robot apparatus 2b.
Fig.19 shows an example of a list of functions sent from a robot apparatus 2c to the server.
Fig.20 shows a state machine for implementing an action function of a message behavior module owned by the robot apparatus 2c.

### Best Mode for Carrying out the Invention

Referring to the drawings, preferred embodiments of the present invention will be explained in detail.

With the information providing system of the embodiments of the present invention, it is possible to provide data or programs suited to the individual robot apparatus, in a multi-platform environment, where there are plural robot apparatus different in hardware structure or platforms.

### (First Embodiment)

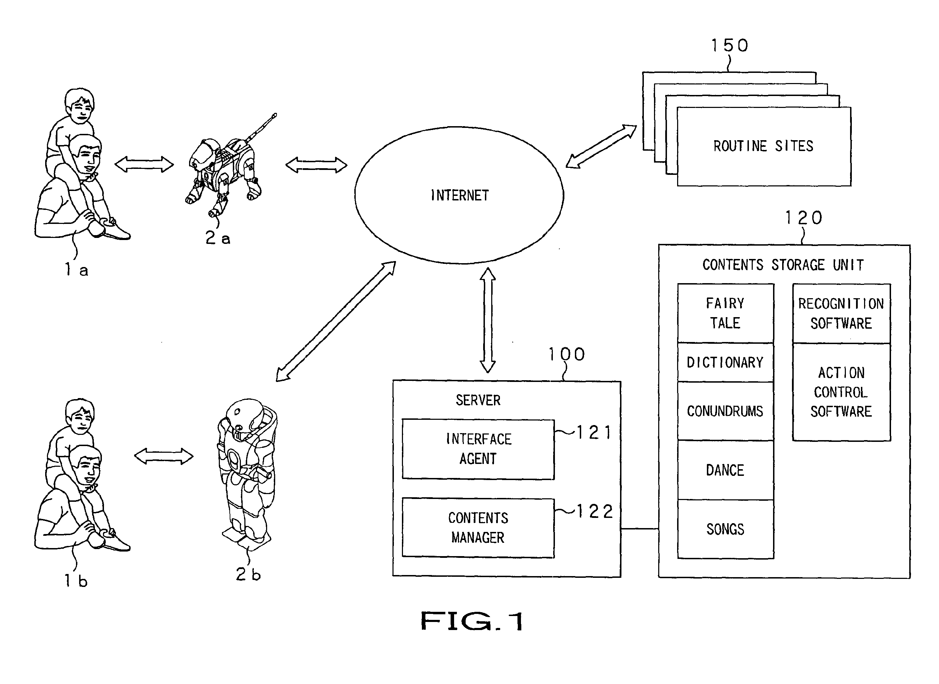

Fig.1 shows the schematic structure of an information providing system of the first embodiment of the present invention.

The robot apparatus is able to interact with the user, such as by having a dialog. The robot apparatus is attached to the Internet over a wire or over a wireless route. In the embodiment of Fig.1, there are two users 1a, 1b and two robot apparatus, that is, robot apparatus 2a, 2b, within the system. In the following explanation, if there is no particular necessity for distinguishing the users 1a and 1b from each other, these users are each denoted a user 1 and, if there is no particular necessity for distinguishing the robot apparatus 2a and 2b from each other, these apparatus are each denoted a robot apparatus 2.

On the Internet is installed a server 100 that can be accessed from the robot apparatus 2. This server 100 supervises the contents provided to the user 1 via the robot apparatus 2. To the Internet are attached other routine sites 150, so that the user 1 is able to access the server 100 either directly or through the robot apparatus 2 for the information exemplified by the news or weather. In the former case, the robot apparatus 2 accesses the server 100 to acquire the information of the sites 150 at large via this server 100.

In the embodiment illustrated, the user 1a interacts with the robot apparatus 2a through e.g. dialog, while the user 1b interacts with the robot apparatus 2 through e.g. dialog. The robot apparatus 2a, 2b access the server 100 in order to comply with the requests by the users 1a, 1b. It is noted that the robot apparatus 2a, 2b differ in type from one manufacturer to another. Even if the manufacturer is the same, the robot apparatus 2a, 2b differ in hardware architecture or in platforms.

The server 100 is responsive to the requests from the robot apparatus 2a, 2b to provide the robot apparatus 2a, 2b, different in hardware architecture or platforms, with data or programs. In the embodiment illustrated, the server 100 includes a content storage unit 120, an interface agent 121 and a contents manager 122.

In the content storage unit 120, there are stored a large variety of data or programs, such as data contents, e.g. fairy stories, dictionaries or conundrums, applications, such as dances or songs, middleware, such as recognition software, or action control software for robot apparatus 2. These data contents and programs may or may not depend in reproduction or execution on the difference in the hardware structures or environments of execution, such as platforms, on the part of the robot apparatus 2. In the present embodiment, there are stored in the content storage unit 120 the executing environment dependent data contents or programs which are suited to the respective execution environments.

The interface agent 121 analyzes requests from the user 1 and delivers the results of analyses to the contents manager 122. Based on the results of analysis, the contents manager 122 selects the data or programs for complying with the requests of the user 1 which data or programs are suited to the hardware structure or platforms of the robot apparatus 2, as the requesting party.

Meanwhile, classification of the software items to be supplied to the robot apparatus 2 may be carried out across plural sites, instead of at a sole site, and Web services may be formed for routing to other sites for cooperation of these sites.

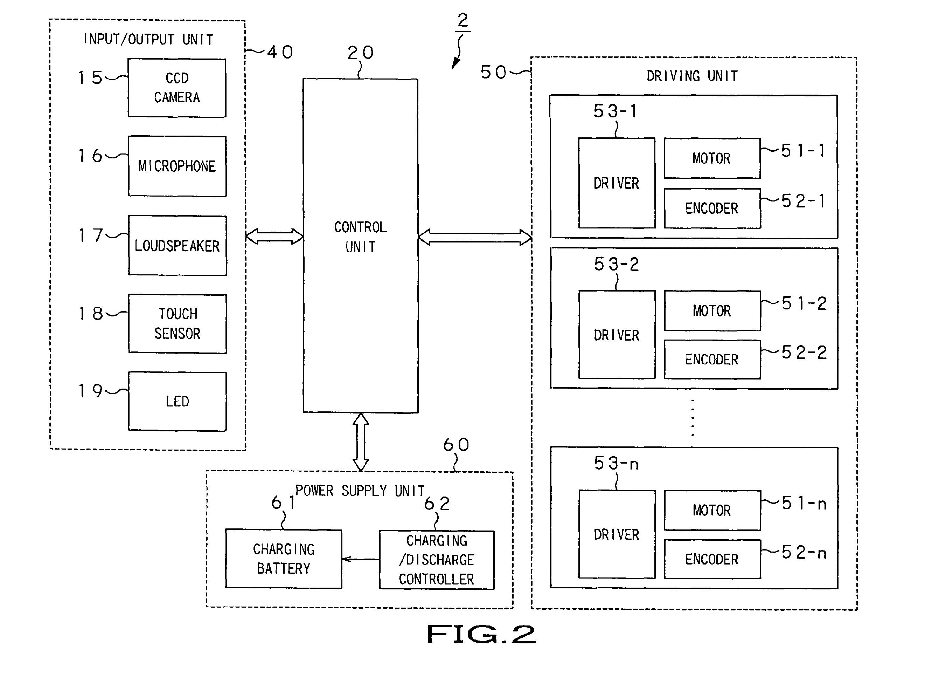

Fig.2 shows an example of the functional structure of the robot apparatus 2 that can be in operation on the information supplying system of the present embodiment. As shown in this figure, the robot apparatus 2 is made up by a control unit 20, taking charge of comprehensive control of the overall operation and other data processing, an input/output unit 40, a driving unit 50 and a power supply unit 60. These respective components are now explained.

An input part of the input/output unit 40 includes a CCD camera 15, equivalent to an eye of the robot apparatus 2, as an inputting unit, a microphone 16, equivalent to its ear, a touch sensor 18 arranged on a site, such as its head or back, or other sensors of various sorts, equivalent to its five senses. An output part of the input/output unit 40 includes a loudspeaker 17, equivalent to the mouth of the robot apparatus, and an LED indicator (eye lamp) 19, forming the facial expressions by the combination of flashing or by the timing of lighting. These components of the output part are able to express the user feedback from the robot apparatus 2, in other forms than the pattern of mechanical movements, exemplified by movements of the legs, that is, by the voice or by the flashing of the lamp.

The driving unit 50 is a functional block for realization of movements of the body unit of the robot apparatus 2, in accordance with a preset movement pattern as commanded by the control unit 20, and is a subject of action control. The driving unit 50 is a functional module for realization of the degrees of freedom in respective joints of the robot apparatus 2, and is made up by plural driving units, provided for the roll, pitch and the yaw axes of the respective joints. Each driving unit is made up by the combination of a motor 51 for effecting rotation about the preset axes, an encoder 52 for detecting the rotational positions of the motor 51, and a driver 53 adaptively controlling the rotational positions or speeds of the motor 51 based on an output of the encoder 52.

The hardware structure of the robot apparatus 2 is determined by the manner of combination of the driving units. For example, the robot apparatus 2 may be formed as legged mobile robots, walking e.g. on two feet or on four feet, or as tired mobile robots.

The power supply unit 60, as its name implies, is a functional module for supplying the electrical power to each electrical circuit in the robot apparatus 2. This robot apparatus 2 in the present embodiment is a battery-driven autonomous driving type apparatus, and the power supply unit 60 is made up by a charging battery 61, and a charging/ discharge controller 62 for supervising the charging/discharging state of the charging battery 61.

The charging battery 61 is formed as a 'battery pack' comprised of plural lithium ion secondary cells packaged in a cartridge.

On the other hand, the charging/ discharge controller 62 grasps the residual capacity of the charging battery 61 by measuring e.g. the ambient temperature of the terminal voltage or the charging/ discharge current of the charging battery 61 to determine the start time or the end time of charging. The time of charging start time or the charging end time, as determined by the charging/ discharge controller 62, is notified to the control unit 20, and is used as a trigger for the robot apparatus 2 to start or terminate the charging operation.

The control unit 20 is equivalent to the brain of the robot apparatus 2 and is loaded e.g. on a head part or on a trunk part of the robot apparatus 2.

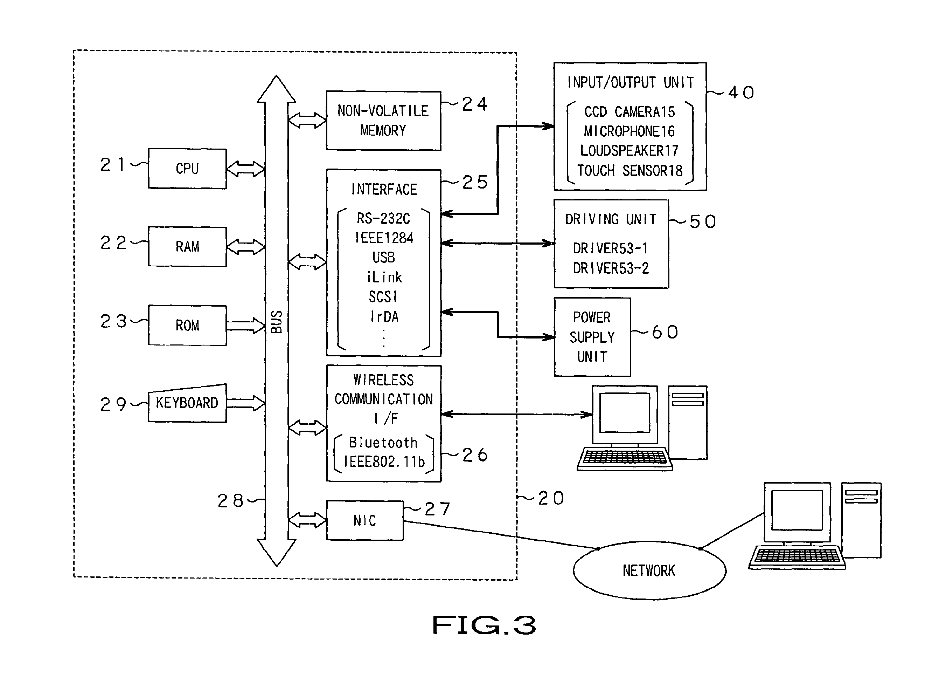

Fig.3 illustrates the structure of the control unit 20 in more detail. As shown in this figure, the control unit 20 is comprised of a CPU (central processing unit) 21, as a main controller, connected over a bus to various circuit components, including a memory, and to peripherals. A bus 28 is a common signal transmitting path including a data bus, an address bus or a control bus. An inherent address is allocated to each of the components connected to the bus. The CPU 21 is able to designate an address to communicate with a specified device on the bus 28.

On the CPU 21, the middleware, exemplified by a variety of application programs, such as contents reproducing software, or the software for recognizing the external environments, by e.g. the visual or auditory sense, is carried out. By the combination of the hardware structure, owned by the robot apparatus 2, and the operating system, the platform of the robot apparatus 2 is determined. The execution program is classed into a type dependent on the execution environment supplied by the platform or the hardware structure and a type not dependent thereon. The execution program is also classed into contents reproducible on the robot apparatus 2 and those not reproducible thereon, depending on the middleware loaded.

A RAM (random access memory) 22 is a rewritable memory, formed by a volatile memory, such as DRAM (dynamic RAM), and is used for loading program codes executed by the CPU 21 or for transient storage of work data by the program being executed.

A ROM (read-only memory) 23 is used for permanent storage of programs or data. The program codes stored in the ROM 23 may be exemplified by a self diagnostic test program, run on power up of the robot apparatus 2, and by a movement control program for controlling the movements of the robot apparatus 2.

The control programs of the robot apparatus 2 may be exemplified by a 'sensor input recognition processing program' for processing sensor inputs, such as those from the CCD camera 15 or the microphone 16, for recognizing the stimuli from outside as symbols, an 'action control program' for controlling the action of the robot apparatus 2 based on sensor inputs and on preset action control programs, as the storage operations, such as short-term storage or long-term storage are taken charge of, a 'driving control program' for controlling the driving of respective joint motors or voice outputs from the loudspeaker 17 in accordance with the action control program, an 'interaction program' for carrying out interactions through a dialog with the user 1, and a 'data/program acquisition program' for accessing the server 100 over a network to acquire data or programs for responding to the requests from the user 1.

A non-volatile memory 24 is comprised of an electrically erasable programmable memory device, such as EEPROM (Electrically Erasable Programmable ROM), and is used for non-volatile storage of data to be updated sequentially. These data to be updated sequentially may be exemplified by e.g. the security information, such as cipher key, and device control programs to be installed following the shipment.

An interface 25 is a device for connection to apparatus outside the control unit 20 for enabling data exchange therewith. The interface 25 executes data inputting/ outputting with e.g. the CCD camera 15, microphone 16 or with the loudspeaker 17, while executing inputting/ outputting of data or commands with respective drivers 53-1, ··· within the driving unit 50.

The interface 25 may also be provided with a serial interface, such as RS (Recommended Standard)-232C, a parallel interface, such as IEEE (Institute of Electrical and Electronic Engineers) 1284, a USB (Universal Serial bus) interface, an i-Link (IEEE1394) interface, an SCSI (Small Computer System Interface) or a memory card interface (card slot) for accommodating a PC card or the Memory Stick (trademark), in order to move programs or data with external apparatus (servers) interconnected locally or attached to the Internet.

Another example of the interface 25 is an infrared (IrDA) interface for wireless communication with external apparatus.

The control unit 20 may also be provided with a wireless communication interface 26 and a network interface card (NIC) 27, whereby the control unit 20 may have data communication with a large variety of external host computers by proximity wireless data communication, such as Bluetooth, a wireless network, such as IEEE 802.11b, or a wide area network, such as the Internet.

By the above-described data communication between the robot apparatus 2 and the host computer, it is possible to calculate complex operational control of the robot apparatus 2, using remote computer resources, to effect remote control or to download contents, such as data or programs, necessary for carrying out the actions complying with the requests by the user 1.

The robot apparatus 2 of the present embodiment downloads motion data (e.g. dance sequences) or other contents for distribution, by streaming or in other forms, from a predetermined Web service site on the Internet. To this end, the platform of the robot apparatus 2 has the following constituent elements (a) to (f):
(a) wireless LAN for connection to the network;
(b) a SOAP(Simple Object Access Protocol)/ XML module for incorporating the information into a SOAP envelope or for extracting the information received;
(c) a HTTP module for communication with SOAP by HTTP (Hyper Text Transfer Protocol);
(d) a software module for supervising the communication;
(e) a motion control module for posture control for dancing; and
f) a voice input/ output module for interaction with a user.

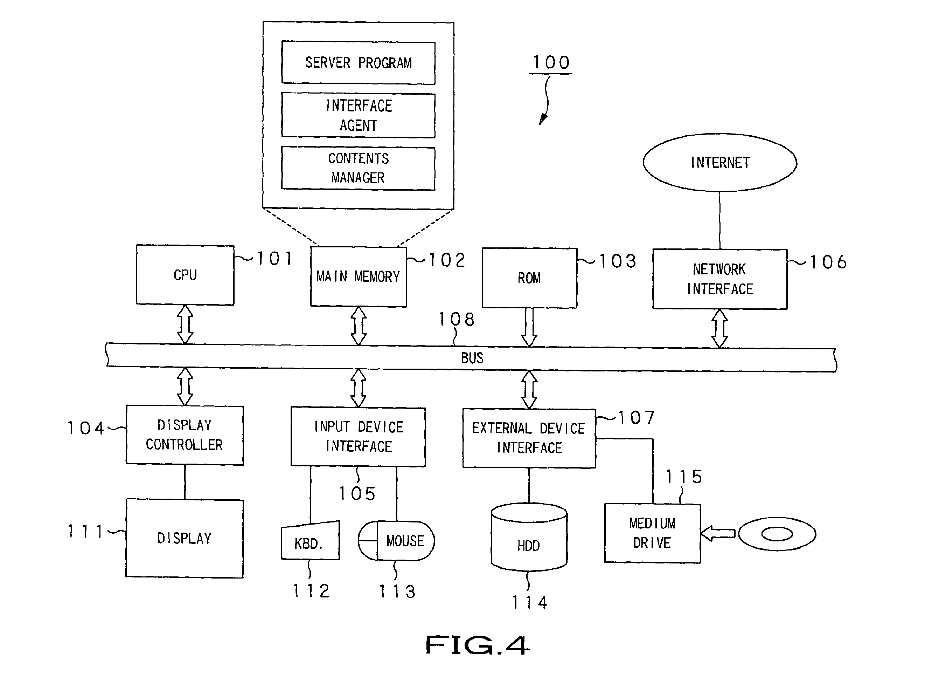

Fig.4 schematically shows the functional architecture of a host computer that may be operated as the server 100 in the present embodiment.

The CPU 101, as a main controller, executes a variety of applications, under control by the operating system.

In the present embodiment, the CPU 101 is able to run a server program for the computer to operate as an HTTP server on the Internet, or software programs, such as an interfacing agent for analyzing requests from the user 1, or a contents manager for providing data or programs for complying with the requests from the user 1, which are suited for the platform or the hardware architecture of the robot apparatus 2 as a requesting entity.

The CPU 101 is interconnected over a bus 108 with other apparatus, as shown.

The main memory 102 is a storage device for loading program codes executed by the CPU 101 or for transient storage of work data of a program being executed, and may e.g. be a semiconductor memory, such as a DRAM. For example, a server program for operation as an HTTP server on the Internet, or a software program, such as 'interface agent' for analyzing requests from the user 1, or 'contents manager' for supplying the data or programs for complying with the requests of the user 1, that are suited for the hardware architecture or the platform of the robot apparatus 2 as a requesting entity, is loaded on the main memory 102.

A ROM (read-only memory) 103 is a semiconductor memory for permanent storage of data. In this ROM are written e.g. a self-diagnostic test on startup (POST: Power On Self test) and program codes for hardware input/ output (BIOS: Basic Input/ Output System).

A display controller 104 is a dedicated controller for actually processing a rendering command issued by the CPU 101. The rendering data, processed in the display controller 104, is written transiently in e.g. a frame buffer, not shown, and is output to a screen of a display 111.

An input apparatus interface 105 is a device for connecting a user input device, such as a keyboard 112 or a mouse 113, to a server 100. The keyboard 112 or the mouse 113 plays the role of capturing user's inputs, such as data or commands, to the system.

The network interface 106 is able to connect the server 100 to a local network (LAN), or to a wide area network, such the Internet, in accordance with a predetermined communication protocol, such as Ethernet (registered trademark).

On the network, plural host computers, not shown, and the robot apparatus 2, as a client, are connected in a transparent condition, to form a distributed computing environment. On the network, distribution services for software programs or data contents, for example, may be carried out. For example, server programs for a host computer to operate as an HTTP server on the Internet, or software programs, such as 'contents manager', for providing data or programs for complying with the request by the user 1, which data or programs are suited for the hardware architecture or the programs of the robot apparatus 2, as a requesting entity, may be downloaded over the network. On the other hand, data or programs for complying with the request by the user 1, which data or programs are suited for the hardware architecture or the programs of the robot apparatus 2, as a requesting entity, may be provided over the network to the robot apparatus 2.

An external apparatus interface 107 is used for connecting external apparatus, such as the hard disc drive (HDD) 114 or a medium drive 115, to the server 100.

The HDD 114 is an external storage device having fixedly mounted thereto a magnetic disc as a storage medium. The HDD is superior in storage capacity or in data transfer speed to other external storage devices. Setting a software program in an executable state on the HDD 114 is termed 'installing' the program on the system. In the HDD 114, there are usually stored, in a non-volatile, state, the program codes, application programs or device drivers of the operating system to be executed by the CPU 101. For example, a server program for enabling the operation as an HTTP server on the internet, or a software program, such as contents manager, providing the data or programs for complying with the requests from the user 1, which data or programs are suited for the platform or the hardware architecture of the robot apparatus 2 as a requesting entity, can be installed on the HDD 114.

In the present embodiment, the HDD 114 forms a content storage unit 120. In the content storage unit 120, there are stored a large variety of data or programs, such as data contents, e.g. fairy stories, dictionaries or conundrums, applications, such as dances or songs, middleware, such as recognition software, or action control software for robot apparatus 2. These data contents and programs for the robot apparatus 2 are classed into those dependent on environments of execution and those not dependent thereon. There are stored in the content storage unit 120 plural execution environment dependent data contents or programs which are suited to the respective execution environments.

A medium drive 115 is adapted for loading a portable medium, such as CD (Compact Disc), a MO (Magneto-Optical Disc), a DVD (Digital Versatile Disc) thereon, and for accessing the data recording surfaces thereof.

The portable medium is mainly used for backing up mainly software programs or data files in a computer readable form or for moving (including selling, circulating and distributing) these programs or files between different systems. For example, a server program for operation as an HTTP server on the Internet, or a software program, such as 'interface agent' for analyzing requests from the user 1, or 'contents manager' for supplying the data or programs for complying with the requests of the user 1, that are suited for the hardware architecture or the platform of the robot apparatus 2 as a requesting entity, may be physically circulated and distributed between plural apparatus by taking advantage of these portable mediums.

For providing services complying with the execution environment for the robot apparatus 2, the server 100 includes the following constituent elements (a) to (d):
(a) a SOAP/ XML module for incorporating the information into a SOAP envelope or for extracting the information received;
(b) an HTTP module for communication with SOAP by HTTP ;
(c) plural contents, such as dance sequences; and
(d) list of contents.

Meanwhile, the SOAP is a protocol for invoking data or services on another system, and is formed based on XML or HTTP. In the communication employing the SOAP, a message comprised of an XML document and the ancillary information appended thereto (envelop) is exchanged by a protocol exemplified by HTTP. By both the client and the server having an engine adapted for generating and interpreting the SOAP, it becomes possible to invoke objects between different environments.

The overall operation in the information providing system of the present invention will now be explained.

Suppose that the user 1 is interacting with the robot apparatus 2, such as by having a dialog, and that the user 1 asked the robot apparatus 2 as to whether or not there is any new information.

For complying with the request by the user 1, the robot apparatus 2 searches the server 100 on the Internet. Suppose that a request of a predetermined format (QA form as later explained) is sent at this time. That is, the robot apparatus 2, having a dialog with the user 1, extracts the necessary information, and fills in a relevant blank field of the form with the information and transmits the resulting form to the server 100.

In the form of the QA style, there is contained the information for specifying the hardware architecture or the platform or the current operating environment of the robot apparatus 2. It may be formulated from the information held internally or acquired, even though the robot apparatus 2 is in a stand-alone state.

The server 17 formulates the necessary reply, in accordance with the form received from the robot apparatus 2, and sends the so formulated reply to the robot apparatus 2 as the requesting party. The robot apparatus 2 reads the reply from the server 10 and advises the user that there is, for example a dance suited to the architecture of the robot apparatus 2.

When the user intimates the robot apparatus 2 that the user is desirous to have the robot apparatus 2 dance, through a dialog, the robot apparatus 2 requests the server 100 to download the dance data. The server 100 commences downloading the dance data, in accordance with the request from the robot apparatus 2.

In this manner, new dance data, suited to the hardware structure or the platform of the robot apparatus 2, as the requesting party, may automatically be selected and the dance performance may then be supplied to the user 1. For example, in song data having dance design, data suited to the architecture of the robot apparatus 2, such as dance data for the robot apparatus 2 to have a dance and reproducible song data, may be selectively supplied to the user.

Among the contents, there are those that are not mainly composed of dance movements, but that permit the robot apparatus 2 to read aloud a fairy tale for the user 1. In general, when the robot apparatus 2 reads aloud a fairy tale, text data needs to be provided as contents, while it is necessary for the robot apparatus 2 to have the function of TTS (text-to-speech) function as middleware (function of outputting a waveform of a voice on inputting a sentence). Moreover, by according suitable movements to a story, such as fairy tale, the result is the application proper to the robot apparatus 2 as an entity. However, since the specified movements, that is, the description of motion data, differ from one robot apparatus to another, it is of a problem how data should be supplied in dependence upon such difference in the description of motion data.

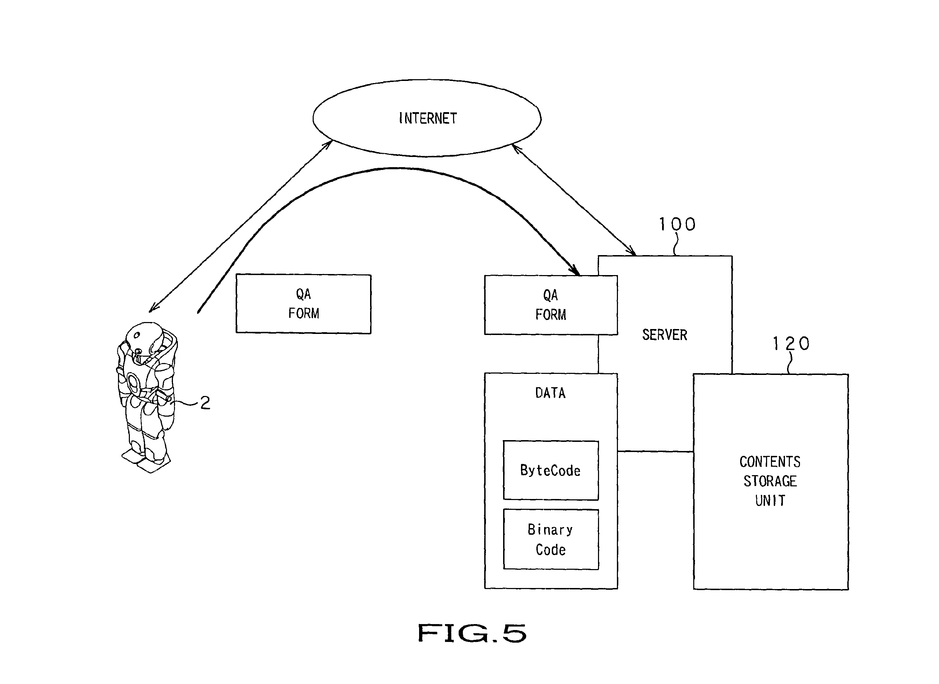

Fig.5 schematically shows, in the information providing system of the present embodiment, the scheme for the server 100 to distribute data or programs, complying with the difference in hardware architecture or platform, to the robot apparatus 2 as a client.

The robot apparatus 2 formulates a QA form through interactions with the user 1, such as dialog. This QA form states the information as a clue to the analyses of the services or contents as requested by the robot apparatus 2, and is delivered to the server 100.

Based on the QA form, the server 100 sends services or contents, requested by the robot apparatus 2, in a form suited for the robot apparatus 2. If the information is insufficient, given the contents of the statements of the QA form, the server 100 returns the request for furnishing the information or the reason why the request cannot be met.

Based on the contents of the QA form thus sent, the server 100 selects the data and the software, as needed, from the contents of the database, and sends the so selected data and software to the robot apparatus 2. In the example shown in Fig.5, the server 100 holds a byte code, as an intermediate code system, not dependent on the CPU, and the binary code, as a CPU dependent form, for each dance data. Based on the results of analysis of the QA form, the server decides in which of the forms of the byte code and the binary code the data is to be sent.

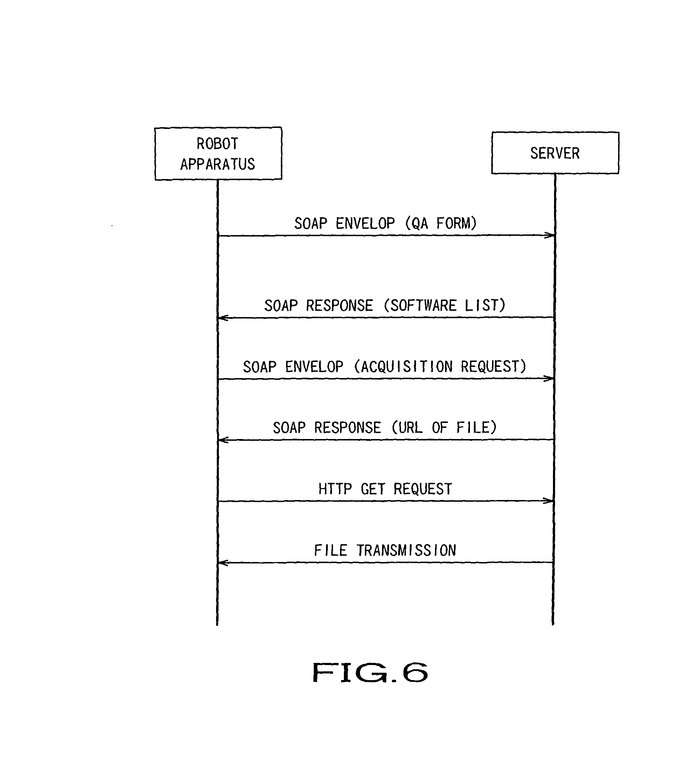

Fig.6 shows the sequence of the cooperative movements of the robot apparatus 2 transmitting the QA form to request data or programs and of the server 10 responding thereto.

As already explained, the platform of the robot apparatus 2 has the following constituent elements (a) to (f):
(a) wireless LAN for connection to the network;
(b) a SOAP/ XML module for incorporating the information into a SOAP envelope or for extracting the information received;
(c) an HTTP module for communication with SOAP by HTTP;
(d) a software module for playing the dancing;
(e) a motion control module for posture control for dancing; and
f) a voice input/ output module for interaction with a user.

On the other hand, for providing services complying with the execution environment for the robot apparatus 2, the server 100 includes the following constituent elements (a) to (d):
(a) a SOAP/ XML module for incorporating the information into a SOAP envelope or for extracting the information received;
(b) an HTTP module for communication with SOAP by HTTP ;
(c) plural contents, such as dance sequences; and
(d) list of contents.

The robot apparatus 2 incorporates the QA form, prepared through interactions with the user 1, into a SOAP envelope, and issues an enquiry to the server 100 by the HTTP protocol.

On the other hand, the server 100 analyzes the SOAP envelope to take out the element information, and formulates a list of software items that may be furnished, so that the list so prepared is matched to the adaptive information of the registered software. This list is incorporated into the SOAP envelop and returned as SOAP reply to the robot apparatus 2.

On receipt of the SOAP reply, the robot apparatus 2 analyzes it to take out the elementary information. The elementary information, thus taken out, is matched to the private information (such as tastes or liking) of the user 1 as stored to select the software that is likely to be matched. The robot apparatus 2 then formulates a request for acquisition to the server 100 and incorporates the request into the SOAP envelop to send the resulting data to the server 100.

On receipt of this request, the server 100 formulates a SOAP response, including the location of the required file, to return the SOAP response to the robot apparatus 2.

The robot apparatus 2 requests the necessary file to the server 100 by an HTTP GET request. When the necessary file is in order, the robot apparatus 2 executes the action required by the user 1, such as dancing.

The information stated in the QA form is roughly divided into
(1) the information pertinent to service requests; and
(2) the information pertinent to the robot apparatus.

The 'information pertinent to service requests' includes the contents of the interactions with the user 1, indices for the emotion, such as instinct or feeling, of the robot apparatus 2 at the time, the temperature or the humidity of the casing as detected, light volume, the sunshine volume, duration of the bright sunshine, and other indices of external stimuli.

The 'information pertinent to the robot apparatus' may further be enumerated by the following:
(2-1) the ID proper to the robot, uniquely allocated from one robot apparatus to another;
(2-2) the robot sort ID uniquely allocated from one robot apparatus to another;
(2-3) list of functions of the robot apparatus;
(2-4) information showing the hardware architecture of the robot apparatus; and
(2-5) database list of the robot apparatus.

The 'list of functions of the robot apparatus' is equivalent to the information on the middleware architecture, such as recognition software for external stimuli (face or voice recognition) and the voice synthesizing software (TTS).

The 'information showing the hardware architecture of the robot apparatus' is the information stating the physical shape of the robot apparatus 2 (e.g. humanoid, quadruped pet type, utility type or tired type), number of legs (two- or four-legged), maximum movement velocity, number of fingers of the hand, transport capability of the hand, other physical properties concerning the casing, and indices of the thinking (calculating) capability.

The server 100 determines the contents (data or programs) to be provided to the robot apparatus 2, using the above information contained in the QA form. To the content storage unit 120, there is added the following meta-information pertinent to the contents:
(1) the block of contents corresponding to the service request; and
(2) the information pertinent to the robot apparatus the contents or the software is efficacious to.

The 'block of contents corresponding to the service request' is the contents to which the information pertinent to services has been added as the meta-information. This meta-information may be enumerated by:
(1-1) information showing the contents
   example) <ContentsType>News</ContentsType>
   <ContentsType>DanceMotion</ContentsType>
(1-2) information showing the data type
   example) <DataType>Text< /DataType>
   <DataType>MIDI<DataType>
(1-3) information showing the date and time of formulation
   example) <CreateDate>2003/03/23</CreateDate>
(1-3) information concerning title
   example) <Title>WeAreSDR</Title>

The 'information concerning the robot apparatus> may be enumerated by:
(2-1) ID specifying the sort of the relevant robot apparatus;
(2-2) list of functions as required for using the contents; and
(2-3) information concerning the architecture of the robot apparatus.

The 'list of functions as required for using the contents' may be a list of the middleware items needed in using and reproducing the contents.

The 'information concerning the architecture of the robot apparatus' may be the information stating the physical shape of the robot apparatus 2, such as humanoid, quadruped pet type, utility type or tired type robots, number of legs (two- or four-legged), maximum movement velocity, number of fingers of the hand, transport capability of the hand, with other physical properties concerning the casing, and indices of the thinking (calculating) capability.

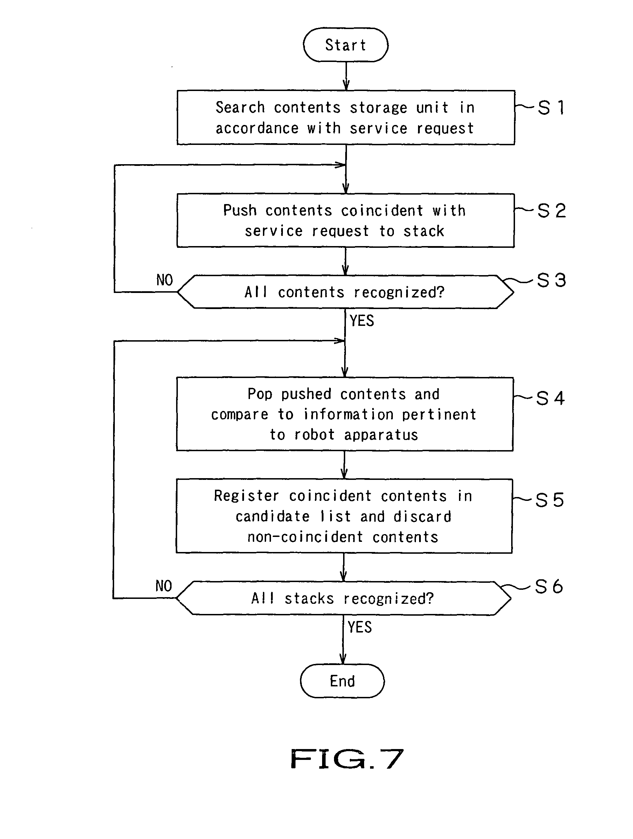

The contents manager 122 of the server 100 takes the matching between the elementary information, as taken out from the QA form, obtained from the robot apparatus 2, to the meta-information of the content storage unit 120, to select the data or programs for complying with the requests by the user 1, which data or programs are suited for the platform or the hardware architecture of the robot apparatus 2 as the requesting party. The operational sequence of the contents manager 122 at this time is shown in the flowchart of Fig.7.

First, in a step S1, the content storage unit 120 is searched, in accordance with the service request. In the next step S2, if there is such contents in a field surrounded by <ContentsType></ContentsType> which is coincident with the service request, it is pushed to a stack. In the next step S3, it is checked whether or not the totality of the contents have been verified. If the totality of the contents have been verified, processing transfers to a step S4 and, if otherwise, processing reverts to the step S2 to repeat the processing similar to that described above.

In a step S4, the pushed contents are popped and compared to the information pertinent to the robot apparatus 2. In a step S5, the coincident contents are registered in a candidate list, while those contents not coincident are discarded. In a step S6, it is verified whether or not all of the stacks have been searched and, when the totality of the stacks have been checked, the processing is completed. If conversely not all of the stacks have been checked, processing reverts to the step S4 to repeat the processing.

By the above sequence of operations, the contents list searched in accordance with the QA form is completed.

With the information providing system, according to the first embodiment, described above, data or programs suited to individual robot apparatus may be provided to enable the services to be executed, by employing the information pertinent to the robot apparatus forwarded, even in a multi-platform environment where there exist plural robot apparatus different in hardware architecture or platform.

### (Second Embodiment)

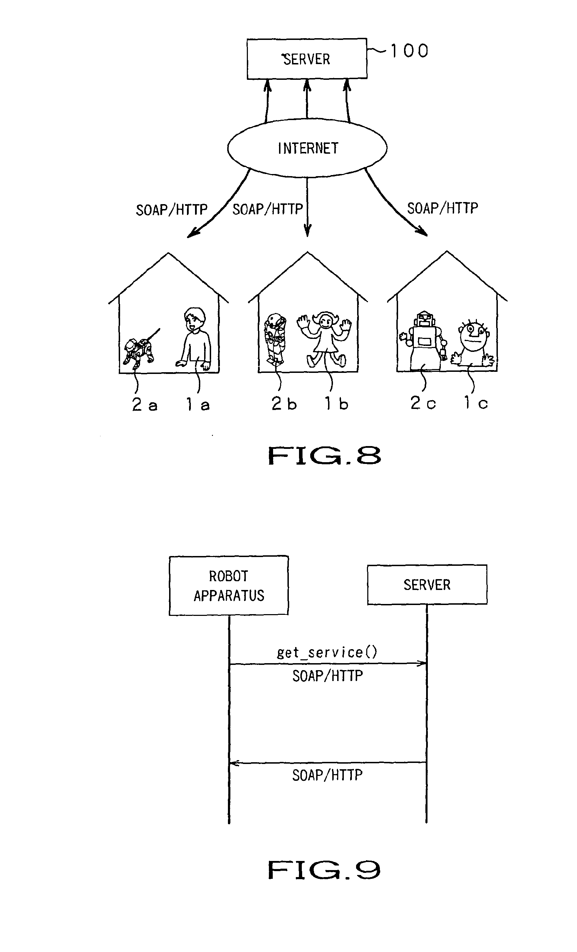

Fig.8 schematically shows the overall architecture of the information providing system of the second embodiment of the present invention.

Suppose that the robot apparatus in different homes are connected over e.g. gateways of the homes to the Internet. In the embodiment of Fig. 8, there are three users 1a, 1b, 1c and three robot apparatus, that is, robot apparatus 2a, 2b, 2c, within the system. In the following explanation, if there is no particular necessity for distinguishing the users 1a, 1b and 1c from one another, these users are each denoted as user 1 and, if there is no particular necessity for distinguishing the robot apparatus 2a to 2c from each other, these apparatus are each denoted a robot apparatus 2. On the Internet, there is installed a server 100 providing services to the robot apparatus 2.

Fig.9 shows gross communication between the robot apparatus 2 and the server 100. That is, the robot apparatus 2 requests services from the server 100. At this time, the robot apparatus 2 sends a list of functions, stating the functions of the robot apparatus 2, in particular the functions of the robot apparatus 2 itself, in particular the list of functions stating the information on the architecture of the middleware items, in addition to the information pertinent to the requests for services, to the server 100, in order to enable the server 100 to select suitable data or programs. The server 100 is responsive to the requests from the robot apparatus 2 to send suitable data or programs to the robot apparatus 2. These data or programs are interpreter languages or byte code of Java or Python, or simple commands. In the present embodiment, suppose that HTTP and the SOAP thereon are used as the Internet protocol.

In the present embodiment, services are assumed to be such that the robot apparatus 2 makes a query to the user 1 and, if the reply from the user 1 is affirmative, the message A is transmitted to the user 1 and, if the reply is negative, the message B is transmitted to the user 1. It is assumed that, in executing the services, the functions of face recognition and voice recognition and the function of synthesizing the speech (TTS function) are required as the functions of the robot apparatus 2. Meanwhile, the respective services and the functions needed for executing the services are associated from the outset within the server 100.

It is now assumed that the above-described robot apparatus 2a has the aforementioned three functions, namely the functions of face recognition, voice recognition and the TTS function. It is also assumed that the robot apparatus 2b has only the function of voice recognition but does not have the remaining two functions. It is also assumed that the robot apparatus 2c has only the function of face recognition but does not have the remaining two functions. Hence, if the same data or programs are sent to the robot apparatus 2a, 2b and 2c, no services can be rendered on the robot apparatus 2 where there is not provided part or all of the functions needed for service execution.

In the server 100 in the present embodiment, the difference in the functions of the individual robot apparatus 2 is taken into consideration, such that, for the robot apparatus 2 not provided with part or all of the functions necessary for executing the services, data or programs for replacing the functions in deficit by the functions usable by the robot apparatus 2 in question are transmitted to enable the execution of the services.

For example, the robot apparatus 2a, 2c, having the face recognition function, are able to discern the user 1, however, the robot apparatus 2b, not having the face recognition function, has to use another function in order to discern the user 1. Thus, the server 100 sends voice waveform data so that the robot apparatus 2b is able to call the name of the user 1 and judgment may be made based on the response. On the other hand, while the robot apparatus 2a, 2b, having the voice recognition function, are able to discern the response to a query with voice, the robot apparatus 2c, not having the voice recognition function, has to use another function in order to verify the response to the query. Thus, in case there are provided switches on left and right shoulders of the robot apparatus 2b, the server 100 transmits voice waveform data such that, when the switch on the right shoulder or that on the left shoulder is pressed, an affirmative response or a negative response will be made, respectively. Moreover, while the robot apparatus 2a having the TTS function is able to speak the query or a message with only a sentence (text data), the robot apparatus 2c, not having the TTS function, has to use another function in order to speak the query or the message. Thus, the server 100 transmits voice waveform data in place of e.g. the sentence (text data).

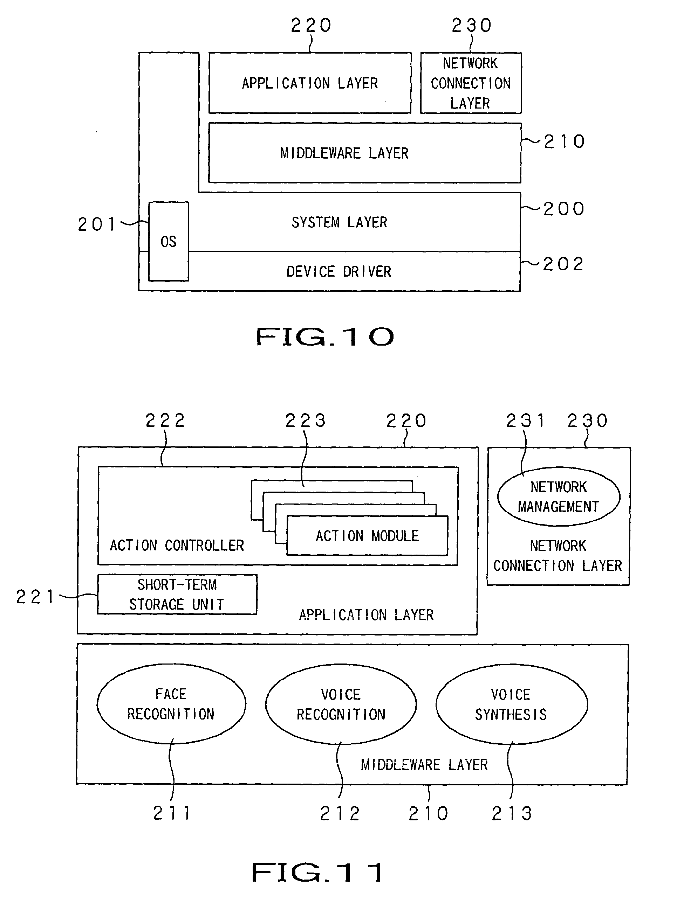

The software configuration of the robot apparatus 2 is shown in Fig.10, from which it is seen that the software of the robot apparatus 2 includes a system layer 200 including an operating system 201, a device driver 202, or a system layer 200, having an API (Application Program Interface) for interfacing therewith, a middleware layer 210, composed of a set of software pieces for realization of the face recognition function, voice recognition function, the voice recognition function or the TTS function, an application layer 220 for executing services or for taking autonomous actions, and a network connection layer 230 for connection to the network to issue proper commands or to transmit/receive data.

Taking the case of the robot apparatus 2a, and referring to Fig.11, the middleware layer 210 and the application layer 220 are explained in further detail. In the middleware layer 210 of the robot apparatus 2a, there exist software objects 211 to 213 for face recognition, voice recognition and for TTS, these being connected to the software items of the system layer 200 and the application layer 220.

The application layer 220 includes a short-term storage unit 221 and an action controller 222. The short-term storage unit 221 integrates the outputs of the middleware layer 210 to store what exists outside the robot apparatus 2a. This short-term storage unit holds e.g. a human being detected once by image processing even in case the person detected goes out of the field of view because of the limitations imposed on the angle of field of view of the CCD camera 15. On the other hand, the action controller 222 properly manages or controls a set of action modules. An action module 223 receives an output of e.g. face recognition from the middleware layer 210 to produce an action of searching or approaching to a face. The action module 223 is also able to request the network connection layer 230 to issue a command or to transmit/ receive data. In the network connection layer 230, there is a software object 231, taking charge of network management, and accessing services on the Internet in accordance with the Internet Protocol to transmit/ receive data or programs. The action module 223 is able to use the script language, such as Java or Python, or byte data, so that the action module may execute the script language or the byte codes, sent from the server 100 on the Internet, to implement the services as the actions of the robot apparatus 2a.

The action module 223 includes a monitor function and an action function. The monitor function monitors the outer and inner states, from the software of the middleware layer 210, to decide on the action value indicating the degree of demand for the actions stated in the action module. A plural number of action modules calculate the action value in parallel. The action controller 222 executes the action function of the action module having a high action value. The action function receives an output e.g. of the face recognition from the software item of the middleware layer 210 to deliver the output to e.g. voice synthesis to control the robot apparatus 2. These functions may be implemented by the script language or the byte codes sent from the server 100 on the Internet, as described above. In the present embodiment the action module 223 may be implemented by a tree structure, as described above.

The following description is directed to a case where these three robot apparatus 2a, 2b, 2c render services, that is, where the robot apparatus 2a, 2b, 2cserach the users 1a, 1b and 1c to make a query and messages A, B, differing in dependence upon whether the response is affirmative or negative, are imparted by voice to the users 1a, 1b and 1c.

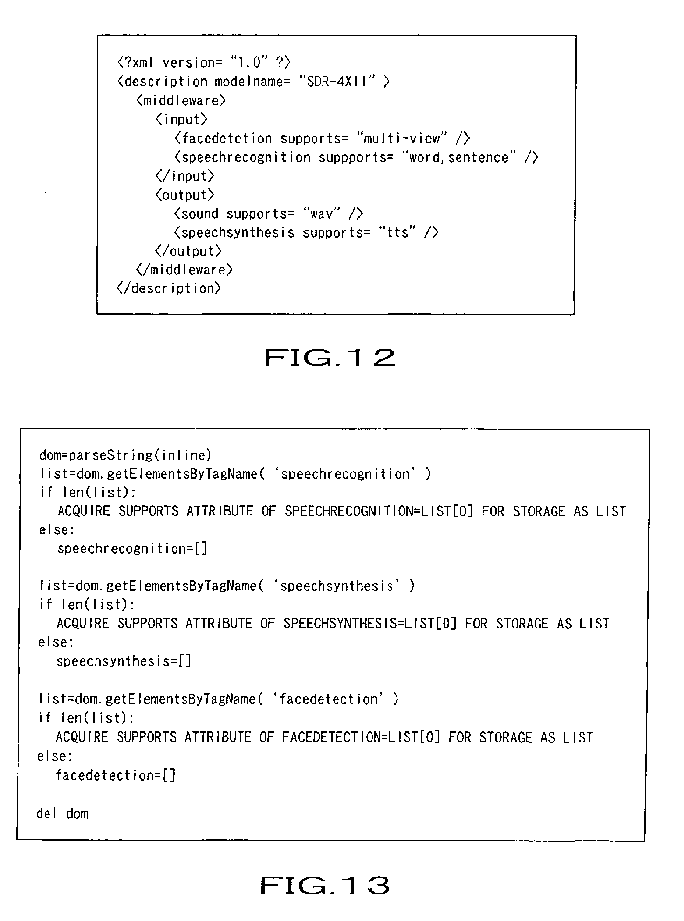

The robot apparatus 2a has the face identifying function, voice recognizing function and the TTS function, and sends the list of functions, shown for example in Fig.12, to the server 100, at the outset, in addition to the information pertinent to service requests.

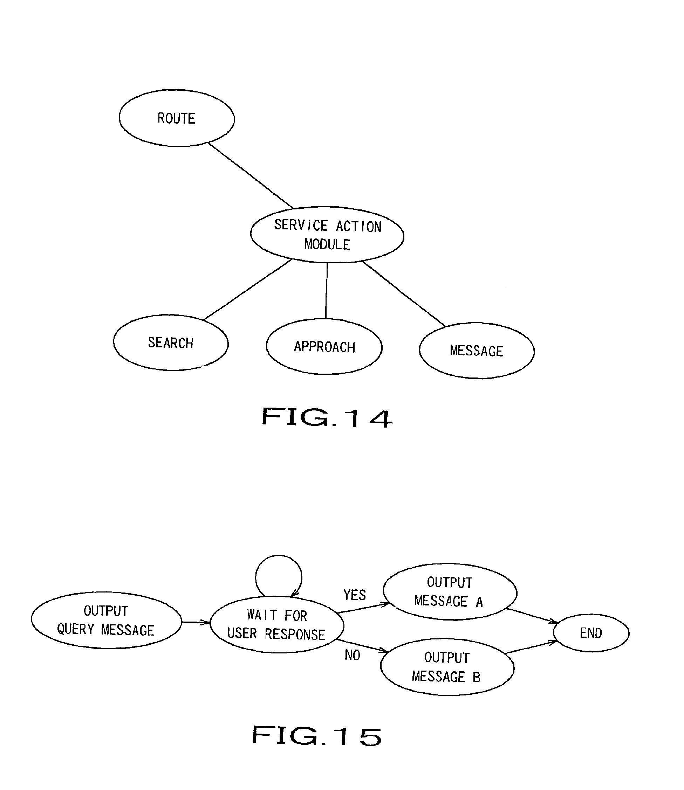

The server 100 specifies the functions needed for rendering the services. In this case, the three functions, namely the face discriminating function, voice discriminating function and the TTS function, are required, as described above. The server 100 analyzes the list of the functions, in accordance with the program shown for example in Fig.13, to verify whether or not the functions needed for rendering the services are ready. Since the robot apparatus 2a has all of the functions needed for rendering the services, the server 100 sends a program which will exploit these three functions to the robot apparatus 2a. Specifically, the server 100 sends data making up a tree structure of the action module, as shown in Fig.14, and implementation of an action function and a monitor function for each of the action modules. In this tree structure, it is assumed that the action controller 222 includes a root module, as a top of the tree structure of the module. A parent module of services in the present embodiment is a service action module, with child modules being a search action module, an approach action module and a message action module.

In this tree structure, there are Face ID and Distance, as a common information area issued by a service action module, these two being c-owned by the modules. In the services of the present embodiment, the co-owned information area is issued in a pre-set state of the FaceID, that is, in such a state where FaceID = userFaceID, for imparting a message to the particular user 1a.

The search action module is an action module for verifying whether or not there is any object, among the objects currently stored in the short-term storage unit 221, which will satisfy FaceID = userFaceID. If there is such object satisfying FaceID = userFaceID, the search action module writes the distance up to such object in the Distance of the co-owned information area. As for the actual monitor function, the user 1a needs to be searched if FaceID = userFaceID, so that a high action value is returned to the service action module. If the user 1a is found, such that FaceID = userFaceID, a low action value is returned to the service action module. As for the action function, since the user 1a has not been found in a state where this search action module has been selected, the viewing point of the robot apparatus 2a is moved to send the new information to the short-term storage unit 221, by way of managing control for finding the user 1a. Specifically, the viewing point of the robot apparatus is changed by the combination of the movements of neck swinging, rotating the trunk part or by walking.

The approach action module is such an action module for managing control for providing a suitable distance with respect to the user 1a as found. The monitor function is such a one which, if a certain value is entered in FaceID as set from the service action module, makes an inquiry at the short-term storage unit 221 as to the value dist of the Distance, and which, if the value dist is within a preset range, returns a high action value. If the value dist is outside the preset range, a low action value is returned because no movement is necessary. The purpose of the action function is approaching to the user 1a, if the value dist is lesser than the minimum value minDialogueDist of the as-set distance, the distance with respect to the user is too small. Hence, a command is issued for the robot apparatus to recede away from the user 1a. If conversely the value dist is larger than the smallest value minDialogueDist of the as-set distance, the distance with respect to the user is too far from the robot apparatus. Hence, a command is issued for the robot apparatus to make a forward movement to approach to the user 1a.

The message action module is such an action module which, when the user 1a is at a distance from the robot apparatus with which dialog is possible, imparts a message in accordance with a proper sequence. As for the monitor function, if FaceID = userFaceID and minDialogueDist ≤ dist ≤ maxDialogueDist, a high action value is returned to the service action module and, if otherwise, a low action value is returned. The action function may be implemented by a state machine shown in Fig.15. That is, a query message is output as text data to the TTS module to wait for a response from the user 1a. If the response from the user 1a is YES, a message A is output to terminate the processing. If conversely the response from the user 1a is NO, a message A is output to terminate the processing.

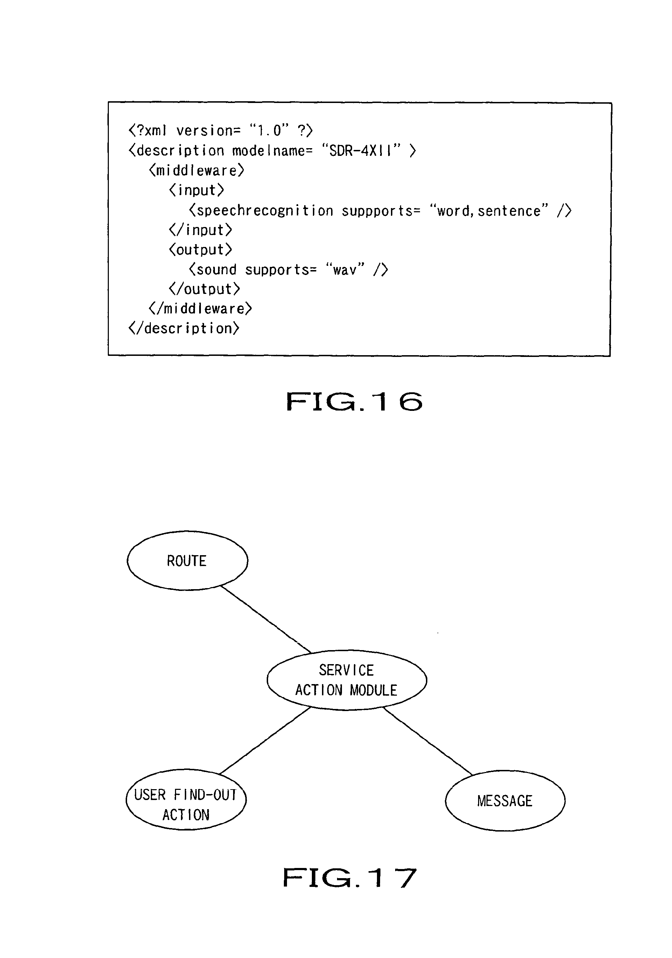

The robot apparatus 2b has only the voice recognizing function, but has neither the face recognizing function nor the TTS function, and hence sends the list of functions, shown for example in Fig.16, to the server 100 in advance, in addition to the information pertinent to the service requests.

The server 100 specifies the functions, as needed for executing the services, in the same way as described above, to analyze the list of the functions, transmitted from the robot apparatus 2b, to verify whether or not the apparatus has the functions necessary for executing the services. Since the robot apparatus 2b has only the voice recognizing function, as described above, the server 100 sends data or programs for replacing the functions in deficit by the functions usable by the robot apparatus 2b. Specifically, the server sends data, forming the tree structure of the action module, and implementation of the action function and the monitor function of each of the action modules, as shown in Fig.17. In this tree structure, the user finding action module and the message action module are formed as child modules of the service action module.

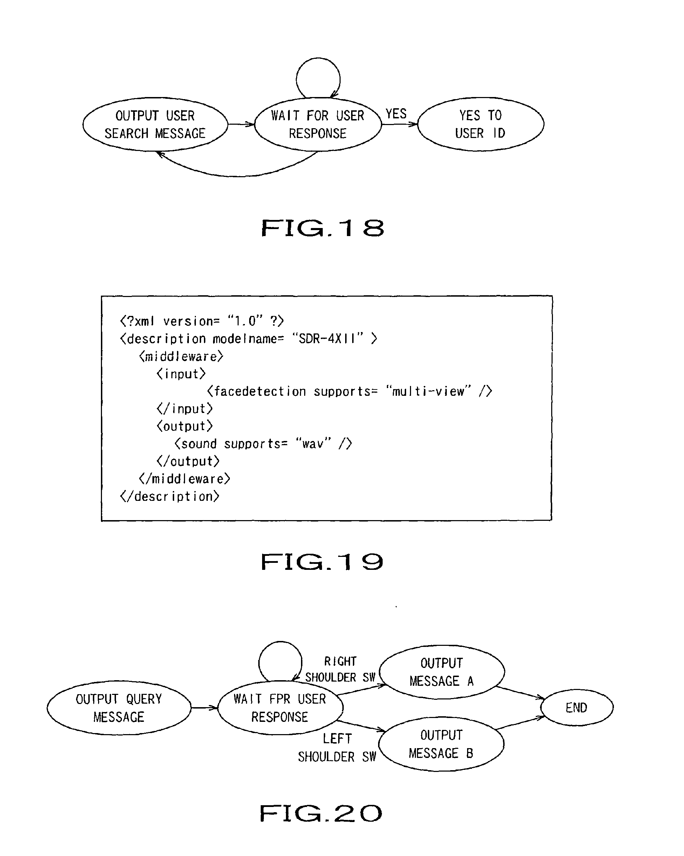

The user finding action module is an action module for finding the user 1b without exploiting the function of face discrimination. Meanwhile, the robot apparatus 2b, not having the TTS function, has an outputting means for audio signals, and is able to output the voice waveform itself. In the present embodiment, the robot apparatus 2b outputs voice waveform data conforming to a WAB file format. This voice waveform is sent from the server 100. The action function may be implemented by a state machine shown in Fig.18. That is, the robot apparatus outputs a user search message reading: "Mr.XX, if you are present, please reply 'yes'" by voice and waits for a response from the user 1b. If the user 1b replies 'yes', it is assumed that the user 1b has been found out and the user ID is set to YES to transfer to the message action module.

The message action module may be implemented with a state machine which is basically the same as that of the robot apparatus 2a. That is, the module outputs a query message to the user 1b to wait for a reply. If the response of the user 1b is YES or NO, the message A or B is output to terminate the processing, respectively. It is noted that the output is the voice waveform data, in a manner different from the case of the robot apparatus 1a.

The robot apparatus 2c has only the function for face recognition, but has neither the function of voice recognition nor the TTS function. Thus, the robot apparatus sends a list of functions, shown for example in Fig. 19, to the server 100 in advance, in addition to the information concerning service requests.

The server 100 specifies the functions needed for rendering the services, in the same manner as described above, and analyzes the list of functions, transmitted from the robot apparatus 2c, to verify whether or not the apparatus has the functions as needed in rendering the services. Since the robot apparatus 2c has only the face recognizing function, as described above, the server 100 sends data or programs for replacing the functions in deficit, that is, the face recognition function and the TTS function, by the functions usable by the robot apparatus 2c. Specifically, the server sends data, forming the tree structure of the action module, and implementation of the action function and the monitor function of each of the action modules, as shown in Fig.14.

The search action module verifies whether or not there is any object, among the objects currently stored in the short-term storage unit 221, which will satisfy FaceID = userFaceID. If there is such object satisfying FaceID = userFaceID, the search action module writes the distance up to such object in the Distance of the co-owned information area.

The approach action module manages control so that the robot apparatus will be at a proper distance from the user 1a, as found out, as in the case of the robot apparatus 1a.

The message action module is such an action module which, when the user 1c is at a distance from the robot apparatus with which dialog is possible, imparts a message in accordance with a proper sequence. At this time, the voice waveform data, sent from the server 100, is output, as in the robot 2b. This message action module may be implemented by a state machine shown in Fig.20. That is, a query message is output to the user 1c to wait for the response. If the reply from the user 1c is YES or NO, message A or B is output, respectively, to terminate the processing. In this case, a right shoulder switch and a left-shoulder switch are used insofar as voice recognition is concerned. This may be implemented by outputting a message reading: "Press right shoulder switch and left-shoulder switch for YES and NO, respectively".

With the above-described information providing system of the second embodiment, the services may be rendered in a multi-platform environment where there exist plural robot apparatus different in the middleware, by scrutinizing the information concerning the functions of the robot apparatus, transmitted from the robot apparatus, and by sending out data or programs for replacing the functions in deficit by the functions usable by the robot apparatus 2 in question.

With the above-described second embodiment, in case the functions are insufficient for rendering the services, the data or programs for replacing the functions in deficit by the functions usable by the robot apparatus are provided to the apparatus. This, however, is not meant for limiting the present invention since the functional object itself corresponding to the function in deficit may be transmitted to the apparatus. In such case, the server 100 stores the functional objects, used by the robot apparatus 2, in e.g. a content storage unit 120. If a list of functions and a request for services are sent from the robot apparatus, the functions necessary for rendering the services are specified, while the necessary functions in deficit in the robot apparatus 2 are also specified. In sending out the data or programs, corresponding to the requested services, the functional objects corresponding to the functions in deficit are retrieved from the content storage unit 120 and transmitted. Of course, the functional objects may also be stored in a database different from the content storage unit 120.

### (Supplement)

The present invention has so far been elucidated with reference to particular embodiments thereof. It is to be noted however that various corrections or substitutions may be envisaged by those skilled in the art within the scope of the present invention as defined by the appended claims.

The purport of the present invention is not necessarily limited to a product termed a "robot". That is, the present invention may be applied to mechanical apparatus, performing movements simulating those of the human being, using electrical or magnetic actions, other commonplace mobile devices, or a data processing system for calculating and processing data stating movements of these devices, even though such mechanical apparatus is classified to toys.

Moreover, the foregoing explanation is directed to services conforming to environments of execution of the robot apparatus by the communication system by SOAP. The present invention is, however, not limited to these services. For example, such a communication system, other than SOAP, which will enable platform-independent remote procedure call (RPC), such as XML-RPC, may also be used. In addition, the software items, provided to the robot apparatus, may be classified not in a sole place, but across plural sites, and a further site may be constructed for enabling co-operation of these sites by providing Web services for routing to other sites.

In sum, the present invention has been disclosed for illustration sake, such that the contents of description of the present specification should not be construed in a limiting fashion. For determining the purport of the present invention, reference should be made to the statements of the claims.

The present invention is not limited to the embodiments described with respect to the drawings, and may be subject to various changes, substitutions or equivalents by those skilled in the art without departing from the scope of the invention as defined in the claims.

### Industrial Applicability

According to the present invention, there may be provided an information providing system and an information providing method whereby data or programs may conveniently be supplied to plural robot apparatus different from one another in hardware architecture or platform.

Moreover, according to the present invention, proper services may be rendered to robot apparatus of a large variety of configurations, or to robot apparatus in which objects recognized by the sensors or picture recognition differ from one another, while the service providers are able to render services in common without having to be conscious of the sorts of the particular robot apparatus.

In addition, according to the present invention, proper services may be provided, using the information pertinent to the robot apparatus, as transmitted, even though the services rendered are in need of different data or programs for robot apparatus of different machine types.

## Claims

1. An information providing apparatus for supplying data or programs over a network to a robot apparatus, comprising:
content storage means having stored data or programs to be supplied to the robot apparatus;
receiving means for receiving an inquiry, pertinent to a service request and the information pertinent to the robot apparatus, from the robot apparatus;
analyzing means for analyzing said inquiry; and
transmitting means for transmitting data or programs, matched to services requested, to said robot apparatus.

2. The information providing apparatus according to claim 1, wherein the apparatus communicates with the robot apparatus in accordance with a SOAP (Simple Object Access Protocol).

3. The information providing apparatus according to claim 1, further comprising:
a database for supervising the supplementary information pertinent to data or programs stored in said content storage means; and
means for taking the matching between said inquiry and the supplementary information of said database, for preparing a list of data or programs that may be provided, and for returning said list to the robot apparatus.

4. The information providing apparatus according to claim 3, further comprising:
means for returning, responsive to results of selection from said robot apparatus for said list of data or programs that can be provided, a method for accessing said selected data or programs;
said transmitting means transmitting the data or programs, as requested, responsive to an access request matched to said accessing method from said robot apparatus.

5. The information providing apparatus according to claim 3, wherein said supplementary information pertinent to said data or programs includes the information pertinent to services and the information pertinent to the robot apparatus.

6. The information providing apparatus according to claim 1 or 5, wherein said information pertinent to the robot apparatus includes at least a part of the following information:
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

7. The information providing apparatus according to claim 1, wherein
said information pertinent to the robot apparatus includes at least a list of functions of the robot apparatus, and
said information providing apparatus further comprising:
means for specifying the functions needed for said robot apparatus to render services; and
means for comparing the needed functions specified by said function specifying means to said list of functions of the robot apparatus for specifying the functions in deficit in said robot apparatus, among said needed functions;
said transmitting means transmitting the data or programs for replacing the functions in deficit by functions usable by said robot apparatus.

8. The information providing apparatus according to claim 1, wherein
the information pertinent to said robot apparatus includes at least a list of functions of the robot apparatus, and
said information providing apparatus further comprising:
object storage means for storage of functional objects utilized by said robot apparatus;
means for specifying the functions needed for said robot apparatus to render services;
means for comparing the needed functions specified by said function specifying means to said list of functions of the robot apparatus for specifying the functions in deficit in said robot apparatus, among said needed functions; and
retrieving means for retrieving an object of the function in deficit, matched to said function in deficit, from said object storage means;
said transmitting means transmitting said object of the function in deficit, along with the data or programs matched to the requested services, to said robot apparatus.

9. An information providing method for providing data or programs over a network to a robot apparatus, comprising:
a receiving step of receiving, from said robot apparatus, an inquiry containing the information pertinent to a service request and the information pertinent to said robot apparatus;
an analysis step of analyzing said inquiry; and
a transmitting step of transmitting the data or program, matched to the requested service, to said robot apparatus.

10. The information providing method according to claim 9, wherein communication with the robot apparatus is by SOAP (Simple Object Access Control).

11. The information providing method according to claim 9, further comprising:
a step of supervising the supplementary information pertinent to each data or program as a database; and
a step of taking the matching of said inquiry and the supplementary information of said database, formulating a list of the data or programs that can be provided, and returning the list to the robot apparatus.

12. The information providing method according to claim 11, further comprising:
a step of returning, responsive to the results of selection from said robot apparatus for said list of the data or programs that can be provided, a method for accessing the data or programs selected;
said transmitting step transmitting data or the program as requested, responsive to the access request complying with said access method from said robot apparatus.

13. The information providing method according to claim 11, wherein said supplementary information pertinent to said data or programs includes the information pertinent to services and the information pertinent to the robot apparatus.

14. The information providing method according to claim 9 or 13, wherein said information pertinent to the robot apparatus includes at least a part of the following information:
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

15. The information providing method according to claim 9, wherein
said information pertinent to the robot apparatus includes at least a list of functions of the robot apparatus, and
said information providing method further comprising:
a step of specifying the functions needed for said robot apparatus to render services; and
a step of comparing the needed functions specified by said function specifying means to said list of functions of the robot apparatus for specifying the functions in deficit in said robot apparatus, among said needed functions;
said transmitting step transmitting the data or programs for substituting the functions usable by said robot apparatus for the functions in deficit.

16. The information providing method according to claim 9, wherein
the information pertinent to said robot apparatus includes at least a list of functions of the robot apparatus, and
said information providing method further comprising:
a step of specifying the functions needed for said robot apparatus to render services;
a step of comparing the needed functions as specified by said needed function specifying step to said list of functions of the robot apparatus for specifying the functions in deficit in said robot apparatus, among said needed functions; and
a retrieving step of retrieving an object of the function in deficit, matched to said function in deficit, from object storage means having stored therein functional objects utilized by said robot apparatus;
said transmitting step transmitting said object of the function in deficit, along with the data or programs matched to the requested services, to said robot apparatus.

17. An information providing system including a robot apparatus and an information providing apparatus for supplying data or programs over a network to a robot apparatus, said system comprising:
content storage means having stored data or programs to be supplied to the robot apparatus;
receiving means for receiving an inquiry, pertinent to a service request and the information pertinent to the robot apparatus, from the robot apparatus;
analyzing means for analyzing said inquiry; and
transmitting means for transmitting data or programs, matched to services requested, to said robot apparatus.

18. The information providing method according to claim 17, wherein the method communicates with the robot apparatus in accordance with a SOAP (Simple Object Access Protocol).

19. The information providing method according to claim 17, further comprising:
a database for supervising the supplementary information pertinent to data or programs stored in said content storage means; and
means of taking the matching between said inquiry and the supplementary information of said database, for preparing a list of data or programs that may be provided, and for returning said list to the robot apparatus.

20. The information providing system according to claim 19, further comprising:
means for returning, responsive to results of selection from said robot apparatus for said list of data or programs that can be provided, a method for accessing said selected data or programs;
said transmitting means transmitting the data or programs, as requested, responsive to an access request matched to said accessing method from said robot apparatus.

21. The information providing method according to claim 19, wherein said supplementary information pertinent to said data or programs includes the information pertinent to services and the information pertinent to the robot apparatus.

22. The information providing system according to claim 17 or 21, wherein said information pertinent to the robot apparatus includes at least a part of the following information:
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

23. The information providing system according to claim 17, wherein
said information pertinent to the robot apparatus includes at least a list of functions of the robot apparatus, and
said information providing apparatus further comprising:
means for specifying the functions needed for said robot apparatus to render services; and
means for comparing the needed functions specified by said function specifying means to said list of functions of the robot apparatus for specifying the functions in deficit in said robot apparatus, among said needed functions;
said transmitting means transmitting the data or programs for substituting the functions usable by said robot apparatus for said functions in deficit.

24. The information providing system according to claim 17, wherein
the information pertinent to said robot apparatus includes at least a list of functions of the robot apparatus, and
said information providing apparatus further comprising:
object storage means having stored therein the functional objects utilized by said robot apparatus;
means for specifying the functions needed for said robot apparatus to render services;
means for comparing the needed functions specified by said function specifying means to said list of functions of the robot apparatus for specifying the functions in deficit in said robot apparatus, among said needed functions; and
retrieving means for retrieving an object of the function in deficit, matched to said function in deficit, from said object storage means;
said transmitting means transmitting said object of the function in deficit, along with the data or programs matched to the requested services, to said robot apparatus.

## Amended claims

### Amended claims under Art. 19.1 PCT

**1.** (Amended) An information providing apparatus for supplying motion data, stating the movements of a body unit of a robot apparatus, or an application program, managing recognition and/or action control, to a robot apparatus, over a network; said apparatus comprising:
content storage means having stored data or programs to be supplied to the robot apparatus;
receiving means for receiving an inquiry, pertinent to a service request and the information pertinent to the robot apparatus, from the robot apparatus;
analyzing means for analyzing said inquiry; and
transmitting means for transmitting data or programs, matched to services requested, to said robot apparatus.

**2.** The information providing apparatus according to claim 1, wherein the apparatus communicates with the robot apparatus in accordance with a SOAP (Simple Object Access Protocol).

**3.** The information providing apparatus according to claim 1, further comprising:
a database for supervising the supplementary information pertinent to data or programs stored in said content storage means; and
means for taking the matching between said inquiry and the supplementary information of said database, for preparing a list of data or programs that may be provided, and for returning said list to the robot apparatus.

**4.** The information providing apparatus according to claim 3, further comprising:
means for returning, responsive to results of selection from said robot apparatus for said list of data or programs that can be provided, a method for accessing said selected data or programs;
said transmitting means transmitting the data or programs, as requested, responsive to an access request matched to said accessing method from said robot apparatus.

**5.** The information providing apparatus according to claim 3, wherein said supplementary information pertinent to said data or programs includes the information pertinent to services and the information pertinent to the robot apparatus.

**6.** The information providing apparatus according to claim 1 or 5, wherein said information pertinent to the robot apparatus includes at least a part of the following information:
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

**7.** (Amended) An information providing apparatus for providing data or a program to a robot apparatus, over a network; said apparatus comprising:
content storage means having stored data or programs to be supplied to the robot apparatus;
receiving means for receiving an inquiry, pertinent to a service request and the information pertinent to the robot apparatus, from the robot apparatus;
analyzing means for analyzing said inquiry; and
transmitting means for transmitting data or programs, matched to services requested, to said robot apparatus;
said information pertinent to the robot apparatus at least including a list of functions of said robot apparatus,
said apparatus further comprising:
means for specifying the functions needed for said robot apparatus to render services; and
means for comparing the needed functions specified by said function specifying means to said list of functions of the robot apparatus for specifying the functions in deficit in said robot apparatus, among said needed functions;
said transmitting means transmitting the data or programs for replacing the functions in deficit by functions usable by said robot apparatus.

**8.** The information providing apparatus according to claim 1, wherein
the information pertinent to said robot apparatus includes at least a list of functions of the robot apparatus, and
said information providing apparatus further comprising:
object storage means for storage of functional objects utilized by said robot apparatus;
means for specifying the functions needed for said robot apparatus to render services;
means for comparing the needed functions specified by said function specifying means to said list of functions of the robot apparatus for specifying the functions in deficit in said robot apparatus, among said needed functions; and
retrieving means for retrieving an object of the function in deficit, matched to said function in deficit, from said object storage means;
said transmitting means transmitting said object of the function in deficit, along with the data or programs matched to the requested services, to said robot apparatus.

**9.** (Amended) An information providing method for supplying motion data, stating the movements of a body unit of a robot apparatus, or an application program, managing recognition and/or action control, to a robot apparatus, over a network; said method comprising:
a receiving step of receiving, from said robot apparatus, an inquiry containing the information pertinent to a service request and the information pertinent to said robot apparatus;
an analysis step of analyzing said inquiry; and
a transmitting step of transmitting the data or program, matched to the requested service, to said robot apparatus.

**10.** The information providing method according to claim 9, wherein communication with the robot apparatus is by SOAP (Simple Object Access Control).

**11.** The information providing method according to claim 9, further comprising:
a step of supervising the supplementary information pertinent to each data or program as a database; and
a step of taking the matching of said inquiry and the supplementary information of said database, formulating a list of the data or programs that can be provided, and returning the list to the robot apparatus.

**12.** The information providing method according to claim 11, further comprising:
a step of returning, responsive to the results of selection from said robot apparatus for said list of the data or programs that can be provided, a method for accessing the data or programs selected;
said transmitting step transmitting data or the program as requested, responsive to the access request complying with said access method from said robot apparatus.

**13.** The information providing method according to claim 11, wherein said supplementary information pertinent to said data or programs includes the information pertinent to services and the information pertinent to the robot apparatus.

**14.** The information providing method according to claim 9 or 13, wherein said information pertinent to the robot apparatus includes at least a part of the following information:
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

**15.** (Amended) An information providing method for providing data or a program to a robot apparatus, over a network, said method comprising:
a receiving step of receiving, from said robot apparatus, an inquiry containing the information pertinent to a service request and the information pertinent to said robot apparatus;
an analysis step of analyzing said inquiry; and
a transmitting step of transmitting the data or program, matched to the requested service, to said robot apparatus;
said information pertinent to the robot apparatus including at least a list of functions of the robot apparatus,
said information providing method further comprising:
a step of specifying the functions needed for said robot apparatus to render services; and
a step of comparing the needed functions specified by said function specifying means to said list of functions of the robot apparatus for specifying the functions in deficit in said robot apparatus, among said needed functions;
said transmitting step transmitting the data or programs for substituting the functions usable by said robot apparatus for the functions in deficit.

**16.** The information providing method according to claim 9, wherein
the information pertinent to said robot apparatus includes at least a list of functions of the robot apparatus, and
said information providing method further comprising:
a step of specifying the functions needed for said robot apparatus to render services;
a step of comparing the needed functions as specified by said needed function specifying step to said list of functions of the robot apparatus for specifying the functions in deficit in said robot apparatus, among said needed functions; and
a retrieving step of retrieving an object of the function in deficit, matched to said function in deficit, from object storage means having stored therein functional objects utilized by said robot apparatus;
said transmitting step transmitting said object of the function in deficit, along with the data or programs matched to the requested services, to said robot apparatus.

**17.** (Amended) An information providing system including a robot apparatus and an information providing apparatus for supplying motion data, stating the movements of a body unit of said robot apparatus, or an application program, managing recognition and/or action control, to a robot apparatus, over a network; said information providing apparatus comprising:
content storage means having stored data or programs to be supplied to the robot apparatus;
receiving means for receiving an inquiry, pertinent to a service request and the information pertinent to the robot apparatus, from the robot apparatus;
analyzing means for analyzing said inquiry; and
transmitting means for transmitting data or programs, matched to services requested, to said robot apparatus.

**18.** The information providing method according to claim 17, wherein the method communicates with the robot apparatus in accordance with a SOAP (Simple Object Access Protocol).

**19.** The information providing method according to claim 17, further comprising:
a database for supervising the supplementary information pertinent to data or programs stored in said content storage means; and
means of taking the matching between said inquiry and the supplementary information of said database, for preparing a list of data or programs that may be provided, and for returning said list to the robot apparatus.

**20.** The information providing system according to claim 19, further comprising:
means for returning, responsive to results of selection from said robot apparatus for said list of data or programs that can be provided, a method for accessing said selected data or programs;
said transmitting means transmitting the data or programs, as requested, responsive to an access request matched to said accessing method from said robot apparatus.

**21.** The information providing method according to claim 19, wherein said supplementary information pertinent to said data or programs includes the information pertinent to services and the information pertinent to the robot apparatus.

**22.** The information providing system according to claim 17 or 21, wherein said information pertinent to the robot apparatus includes at least a part of the following information:
(1) an ID proper to a robot apparatus, uniquely allocated to each robot apparatus;
(2) a robot sort ID uniquely allocated to each of the sorts of the robot apparatus;
(3) a list of functions of the robot apparatus;
(4) the information indicating the hardware architecture of the robot apparatus; and
(5) a database list owned by the robot apparatus.

**23.** The information providing system according to claim 17, wherein
said information pertinent to the robot apparatus includes at least a list of functions of the robot apparatus, and
said information providing apparatus further comprising:
means for specifying the functions needed for said robot apparatus to render services; and
means for comparing the needed functions specified by said function specifying means to said list of functions of the robot apparatus for specifying the functions in deficit in said robot apparatus, among said needed functions;
said transmitting means transmitting the data or programs for substituting the functions usable by said robot apparatus for said functions in deficit.

**24.** The information providing system according to claim 17, wherein
the information pertinent to said robot apparatus includes at least a list of functions of the robot apparatus, and
said information providing apparatus further comprising:
object storage means having stored therein the functional objects utilized by said robot apparatus;
means for specifying the functions needed for said robot apparatus to render services;
means for comparing the needed functions specified by said function specifying means to said list of functions of the robot apparatus for specifying the functions in deficit in said robot apparatus, among said needed functions; and
retrieving means for retrieving an object of the function in deficit, matched to said function in deficit, from said object storage means;
said transmitting means transmitting said object of the function in deficit, along with the data or programs matched to the requested services, to said robot apparatus.

Statement under Art. 19.1 PCT

**1.** In an opinion dated June 4, 2003, the Examiner cited Publication 1 (JP 2001-222624 A (Sony Corporation), August 17, 2001), Publication 2 (JP 2002-323980 A (KK DENSO), November 08, 2002) and Publication 3 (JP 2003-6133 A (KK CANON), January 10, 2003), and expressed his view that claims 1 to 6, 8-14, 16 to 22 and 24 lack in inventive step.
   Hence, the present Applicant submitted an Amendment as of August 13, 2004, based on the provision of Article 19 of PCT, for correcting the claims for clarifying the features of the present invention.
   It is believed that, by the present correction of the claims, the present Application does have the inventive step. However, the Applicant intends to express his opinion further, as follows:
**2.** The invention of the present application
   The present invention is relative with an apparatus, a method and a system for providing the information, and has features as stated in the claims.
   That is, the invention stated in claim 1, amended with the aforementioned amendment, resides in
   'an information providing apparatus for supplying motion data, stating the movements of a body unit of a robot apparatus, or an application program, managing recognition and/or action control, to a robot apparatus, over a network; said apparatus comprising:
   content storage means having stored data or programs to be supplied to the robot apparatus;
   receiving means for receiving an inquiry, pertinent to a service request and the information pertinent to the robot apparatus, from the robot apparatus;
   analyzing means for analyzing said inquiry; and
   transmitting means for transmitting data or programs, matched to services requested, to said robot apparatus.'

   On the other hand, claim 9, amended by the aforementioned amendment, states an invention on the information providing method associated with the information providing apparatus of claim 1.
   An invention stated in claim 17, amended by the aforementioned amendment, is directed to
   'an information providing system including a robot apparatus and an information providing apparatus for supplying motion data, stating the movements of a body unit of a robot apparatus, or an application program, managing recognition and/or action control, to a robot apparatus, over a network; said information providing apparatus comprising:
   content storage means having stored data or programs to be supplied to the robot apparatus;
   receiving means for receiving an inquiry, pertinent to a service request and the information pertinent to the robot apparatus, from the robot apparatus;
   analyzing means for analyzing said inquiry; and
   transmitting means for transmitting data or programs, matched to services requested, to said robot apparatus.'
**3.** Statement of cited references
   The aforementioned Publication 1 is relative with an information providing system, an information providing method, a component part supplying apparatus and a component part supplying method. In paragraphs [0084] to [0101] of the specification of Publication 1, the status information of the robot apparatus is sent over a network to a server, the server then analyzes the individual information to transmit a purchasable software piece as an item for selection to an individual terminal, and the individual terminal then purchases the selected software piece.
   The aforementioned Publication 2 is relative with a program introducing system, a server and a client. This Publication 2 discloses a technique in which the server receives the information pertinent to the service request and the information pertinent to resources owned by the client, from the client, and transmits, in case the client lacks in a program needed in rendering the services, the necessary program, along with data corresponding to the services requested.
   In the paragraph [0043] of the aforementioned Publication 3, there is stated a technique for communication of e.g. the information of an apparatus with other apparatus(es) in accordance with the SOAP protocol.
**4.** Comparison of the invention of the present application and the cited reference
   As may be apparent from the amended claims, the inventions pertinent to claims 1, 9 and 17 of the present application are featured by the fact that, in providing motion data stating the movements of the body unit of a robot apparatus or an application program carrying out recognition and/or action control, from an information providing apparatus over a network to the robot apparatus, the information providing apparatus receives an inquiry containing the information pertinent to a service request and the information pertinent to the robot apparatus, from the robot apparatus, analyzes the inquiry received, and transmits the data or the program associated with the services as requested.
   With the inventions stated in the claims 1, 9 and 17 of the present application, having the above feature, the motion data stating the movements of the body unit of a robot apparatus or an application program carrying out recognition and/or action control, which motion data or application program is suited for an individual robot apparatus, may be provided to enable the services to be rendered, even in case where there reside plural robot apparatus different in hardware architecture or platforms.
   In the aforementioned Publications 1 or 2, no mention is made of the aforementioned feature, in particular the feature of providing the motion data stating the movements of the body unit of a robot apparatus or an application program carrying out recognition and/or action control.
   Consequently, the inventions of claims 1, 9 and 17 of the present application are not readily thought out based on the techniques disclosed in the Publications 1, 2, or on the combinations thereof.
   In paragraph [0043] of the specification of Publication 3, there is disclosed a technique of communication between apparatus in accordance with the SOAP protocol, as in the invention of claims 2, 10 and 18 of the present application. However, since these claims 1, 9 and 17 are dependent on the aforementioned claims 1, 9 and 17 of the present application, described above, it is believed that these claims have inventive steps.
**5.** Conclusion
   As will become apparent from the foregoing, the inventions of the present application have peculiar structures not stated or suggested in the above Publications 1 to 3, and give peculiar effects not premeditated from the techniques disclosed in these Publications. It is felt that these inventions could not be readily made by those skilled in the art based on the inventions disclosed in these Publications 1 to 3 and hence exhibit inventive steps.
